# DEMANDE DE BREVET EUROPEEN

(11) **EP 1 262 867 A1**
(43) Date de publication de la demande: **04.12.2002**
(21) Numéro de dépôt: 02291287.7
(22) Date de dépôt: 28.05.2002
(51) Int. Cl.: G06F 9/44, G06F 9/46

(54) **Procédé d'implémentation d'une pluralité d'interfaces d'objets**

(30) Priorité: 30.05.2001 FR 0107025
(71) Demandeur: BULL S.A., 78430 Louveciennes (FR)
(72) Inventeur: Leclerf, Guy, 78340 Les Clayes Sous Bois (FR)
(74) Mandataire: Denis, Hervé

(57) **Abrégé**

La présente invention concerne un procédé d'implémentation, dans un système informatique, d'une pluralité d'interfaces d'objets, ces objets étant des objets du type COM « Component Object Model » ou des collections de ces objets, caractérisé en ce qu'il comprend :
une étape de mémorisation d'une description de chaque interface (2) d'objets dans un langage de description d'interface (IDL),
une étape de mémorisation dans un langage de programmation orienté objet d'une classe (1) modèle, cette classe correspondant à l'implémentation d'une interface (4) dite générique exposant toutes les méthodes des interfaces (2) d'objets décrites dans le langage de description d'interfaces,
une étape de mémorisation pour chaque interface (2) d'objet dans un langage de programmation orienté objet, d'une classe (3) héritant de la classe (1) modèle et correspondant à l'implémentation de l'interface (2) d'objet.

## Description

La présente invention concerne un procédé d'implémentation d'une pluralité d'interfaces d'objets, ces objets étant notamment des composants de programme du type COM (en anglais: "Component Object Model) développé par la société Microsoft. Le procédé est utilisé notamment lors de la conception d'un programme de gestion de systèmes informatiques reposant sur une hiérarchie d'objets organisés en collections d'objets, en particulier pour la création ou la modification de ces collections d'objets, ces collections étant elles-même des objets au sens COM.

La technologie COM permet à des composants logiciels de communiquer entre eux sans se soucier de la machine sur laquelle est installé chaque composant du moment que ces machines sont connectées à un même réseau de communication. Par conséquent, la technologie COM est bien adaptée pour concevoir, par exemple, une application du type plate forme d'administration distribuée dans un système ouvert. Les ouvrages suivants définissent les principes de fonctionnement de la technologie COM.
**La référence du programmeur ATL-COM**
Richard Grimes (Eyrolles, 1999)
**Au coeur de COM+**
Guy & Henry Eddon (Microsoft Press, 2000)
**Essential COM** (en Anglais)
Don Box (Addison-Wesley, 1998)
**Professional ATL COM Programming** (en Anglais)
Richard Grimes (Wrox Press, 1998)
**ATL Internals** (en Anglais)
Brent Rector & Chris Sells (Addison-Wesley, 1999)

Pour permettre de manipuler les composants COM, le concepteur de l'application décrit une interface de type COM pour chaque composant. Une interface constitue la partie publique d'un objet, c'est-à-dire que l'interface fournit à un utilisateur ou client des fonctionnalités, dites méthodes, pour manipuler les objets, certaines méthodes pouvant être appelées propriétés. Cependant, l'interface ne fait que présenter les méthodes mais ne permet pas l'exécution de ces méthodes. Pour exécuter les méthodes, le concepteur développe, dans un langage de programmation orienté objet, par exemple le langage C++, un programme implémentant les méthodes exposées par chaque interface.

Dans une application, il est possible qu'une pluralité d'interfaces utilise les mêmes méthodes. Par conséquent il est avantageux de décrire, dans un langage de description d'interface, une interface dite générique exposant toutes les méthodes de ces interfaces. Ainsi, par simple relation d'héritage avec cette interface générique, les autres interfaces peuvent être décrites en définissant simplement de façon non ambiguë le type d'objets auxquels s'applique l'interface particulière.

Pour réaliser l'implémentation d'une telle interface générique dans le langage C++, il suffit donc de décrire une classe modèle (en anglais: "template") qui a comme paramètres, entre autres, le type des objets sur lesquels s'applique l'interface.

Cependant, dans les langages de description d'interfaces il n'est pas possible d'associer comme classe d'implémentation d'une interface, une classe modèle. Par conséquent, il est nécessaire, lors de l'implémentation dans le langage C++, de décrire toutes les méthodes des interfaces. Ainsi, il faut réécrire les méthodes communes dans toutes les classes d'implémentation des interfaces. Cette méthode est fastidieuse et donc source d'erreurs. De plus, si des corrections sont nécessaires dans la description d'une ou plusieurs méthodes communes, le concepteur doit reporter la ou les corrections dans toutes les classes d'implémentation.

La présente invention a donc pour objet de pallier les inconvénients de l'art antérieur en proposant un procédé d'implémentation d'une pluralité d'interfaces d'objets permettant de limiter le volume et la redondance du code d'implémentation des interfaces et de simplifier la maintenance, c'est-à-dire notamment les corrections du code d'implémentation des interfaces.

Ce but est atteint par un procédé d'implémentation, dans un système informatique incluant au moins un processeur et des moyens de mémoire, d'une pluralité d'interfaces d'objets, ces objets étant des objets du type COM « Component Object Model » ou des collections de ces objets, et contenus dans les dits moyens de mémoire, caractérisé en ce qu'il comprend :
une étape de mémorisation dans un fichier d'une description de chaque interface d'objets dans un langage de description d'interface (IDL),
une étape de mémorisation dans un fichier d'une description dans un langage de programmation orienté objet d'une classe modèle, cette classe correspondant à l'implémentation d'une interface dite générique exposant toutes les méthodes des interfaces d'objets décrites dans le langage de description d'interfaces,
une étape de mémorisation pour chaque interface d'objet dans un fichier de la description, dans un langage de programmation orienté objet, d'une classe héritant de la classe modèle et correspondant à l'implémentation de l'interface d'objet.

Selon une particularité, le procédé est caractérisé en ce qu'il comprend :
une étape de mémorisation dans un fichier d'une description dans le langage de description d'interfaces, de l'interface d'objet générique,
une étape de mémorisation dans un fichier de la description de chaque interface d'objets consistant alors à établir une relation d'héritage avec l'interface d'objets générique dans le langage de description d'interface.

Selon une autre particularité, le procédé est caractérisé en ce que l'étape de mémorisation dans un fichier d'une description de l'interface d'objet générique, dans le langage de description d'interfaces, comprend une description d'une première interface générique correspondant à une collection d'objets à taille variable et une description d'une deuxième interface générique correspondant à une collection d'objets à taille fixe.

Selon une autre particularité, le procédé est caractérisé en ce que le langage de description d'interfaces est le langage "Interface Definition Language" (IDL).

Selon une autre particularité, le procédé est caractérisé en ce que le langage de programmation orienté objet est le langage C++.

Selon une autre particularité, le procédé est caractérisé en ce que chaque interface d'objet est une interface de collection d'objets exposant toutes les méthodes de gestion d'une collection.

L'invention a aussi pour objets corollaires le système informatique pour la mise en oeuvre du procédé de l'invention et le programme d'ordinateur correspondant.

L'invention, avec ses caractéristiques et avantages, ressortira plus clairement à la lecture de la description d'un exemple de réalisation et faite en référence aux dessins annexés dans lesquels:
- la figure 1 représente un schéma des liens existant entre des interfaces d'objets COM et leur classe d'implémentation respective,
- la figure 2 représente la structure hiérarchisée de composants COM d'un programme de gestion de systèmes informatiques utilisant le procédé selon l'invention.

Afin de mieux comprendre l'invention, il convient de rappeler le contexte de l'invention. Tout d'abord, un objet ou un composant COM est un composant distribué de type logiciel. Comme expliqué précédemment, la technologie COM permet à deux objets de type COM de communiquer entre eux sans prendre en considération la plate-forme sur laquelle est installé chaque composant, dans la mesure où ces plate-formes sont connectées à un même réseau.

Une interface d'objets COM est en fait un ensemble de fonctionnalités qui sont accessibles par des clients. Par clients, il faut comprendre ici des applications telles que Visual Basic (commercialisé par la société Microsoft), des scripts de Visual Basic, des pages de type « page Internet ». L'interface présente ou expose à ces clients les fonctionnalités que réalise l'objet COM correspondant. De même, par l'intermédiaire de son implémentation, une interface fait réaliser par cet objet COM les opérations correspondant à la fonctionnalité appelée par le client. Le mode d'exécution interne des fonctionnalités de l'interface des objets COM n'est pas visible par le client.

L'implémentation de l'interface doit permettre l'exécution de toutes les fonctionnalités exposées par l'interface. La description des fonctionnalités d'une interface est réalisée par l'intermédiaire d'un langage de description d'interface, par exemple, le langage IDL (en anglais: "Interface définition Language").

En règle générale, le langage choisi pour l'implémentation d'une interface est un langage orienté objet, tel que le langage C++.

Dans le contexte de l'invention, on suppose qu'une pluralité d'interfaces présente le même jeu de fonctionnalités pour toutes les interfaces. Cependant, ce jeu de fonctionnalités peut s'appliquer à des objets de type tout à fait différent.

Il est connu dans le langage C++, des classes modèles appelées couramment en anglais "template" qui permettent de générer une ou plusieurs fonctions de la même façon mais sur des objets de type différent. Ainsi, une seule classe modèle permet, en choisissant comme paramètre de cette fonction un type d'objet déterminé, de réaliser la fonction de cette classe pour le type d'objet spécifié. L'utilisation d'une classe modèle permet alors de réduire le volume de code pour l'exécution d'une même fonctionnalité pour des types d'objets différents.

Cependant, par construction, le langage IDL de description d'interface ne permet pas d'associer, à une interface, une classe d'implémentation de type classe modèle. En d'autres termes, la co-classe d'une interface ne peut pas être une classe modèle ("template").

Par ailleurs, il est connu que les langages de programmation orientés objet, et plus particulièrement le langage C++, fournissent un mécanisme d'héritage. Ce mécanisme permet à une classe donnée de reproduire les fonctionnalités d'une autre classe dont elle hérite.

Le principe du procédé selon l'invention consiste à faire hériter la classe d'implémentation d'une interface particulière d'une pluralité d'interfaces, d'une classe modèle, cette classe modèle décrivant les fonctionnalités d'une pluralité d'interfaces. En effet, dans cette configuration, la classe d'implémentation de l'interface particulière n'est pas une classe modèle ("template") mais hérite seulement d'une classe modèle.

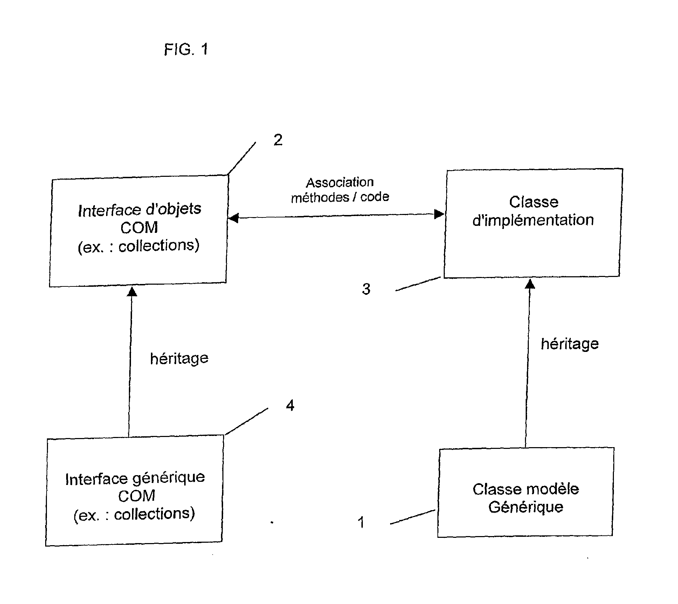

La figure 1 résume le mécanisme du procédé selon l'invention. Tout d'abord, le concepteur d'une application basée sur l'utilisation d'une pluralité d'interfaces construit une classe modèle (1), dite générique, permettant de réaliser la ou les fonctionnalités communes à toutes les interfaces particulières. En d'autres termes, si toutes les interfaces particulières exposent la ou les mêmes fonctionnalités, même appliquées à des objets de type très différent, la classe modèle réalisée par le concepteur décrira cette ou ces fonctionnalités. Ainsi, lors de l'implémentation d'une interface particulière (2), la déclaration de l'héritage de la classe modèle consiste à déclarer, dans la classe d'implémentation (3) de l'interface particulière, comme paramètre de la classe modèle, notamment le type du ou des objets sur lesquels portent les fonctionnalités de l'interface particulière (2).

Dans une autre variante de réalisation, le concepteur définit une interface (4) dite générique qui expose toutes les fonctionnalités des interfaces particulières comprenant le même jeu de fonctionnalités. Ainsi, la définition de chaque interface particulière consiste à faire hériter l'interface particulière de l'interface générique. En d'autres termes, la définition d'une interface particulière se limite à la déclaration de l'héritage de l'interface générique.

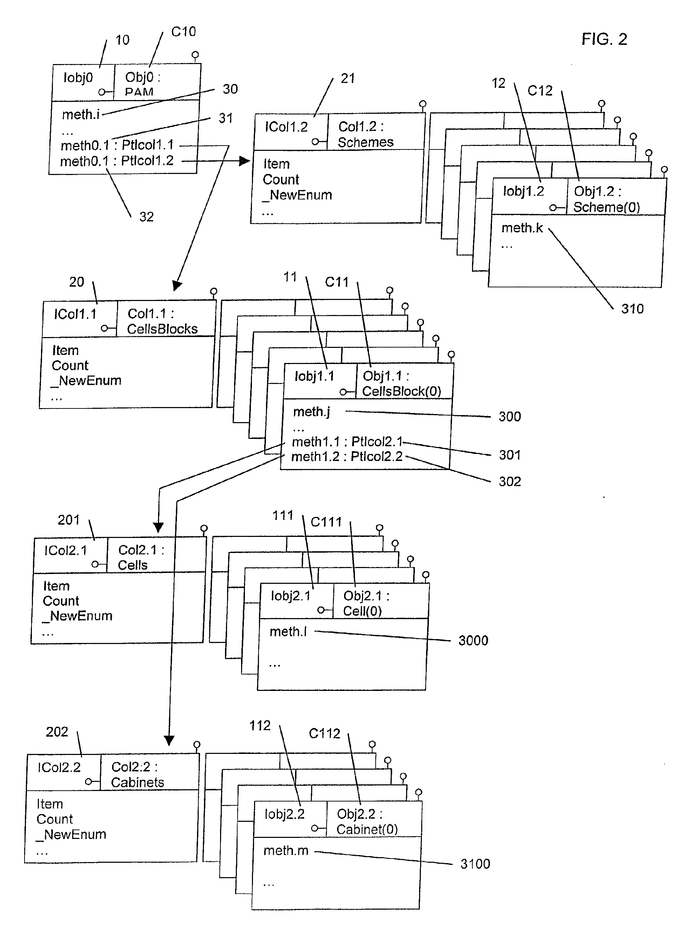

Afin de mieux comprendre le procédé selon l'invention, il va à présent être décrit un exemple d'utilisation du procédé pour un programme de gestion de systèmes informatiques reposant sur une hiérarchie d'objets organisés en collections d'objets, chaque objet étant constitué d'un composant au sens COM, et ces collections constituant elles-même des objets au sens COM. La hiérarchie d'objets est représentée à la figure 2.

Dans cet exemple, chaque objet logiciel au sens COM (C10, C11, C12, C111, C112) de la structure correspond dans notre exemple, à un composant matériel qu'une plate-forme de gestion peut gérer par l'intermédiaire du programme de gestion. C'est à dire que pour chaque composant matériel, un objet logiciel (C10, C11, C12, C111, C112) contient ou gère des caractéristiques matérielles qui lui sont propres, telles que numéro de série, température, nombre, nature et identification des sous-composants.

Chaque objet de la structure logicielle est identifié de manière unique et est accessible au travers d'interfaces Icol*.* (20, 21, 201, 202) de collections d'objets et d'interfaces Iobj*.* (10, 11, 12, 111, 112) d'objets collectionnés. Chaque collection d'objets comprend un nombre déterminé et fixe d'objets ou un nombre variable d'objets.

Une interface de collection au sens COM est une interface qui doit toujours présenter le même jeu de fonctionnalités, ou méthodes, imposées pour manipuler les objets de la collection. Certaines de ces méthodes sont obligatoires, par exemple "_NewEnum", "Count", "Item", et d'autres sont optionnelles, par exemple, "Add", "Remove", "Clear".
"_NewEnum": cette méthode permet une itération des objets de la collection.
"Count": cette méthode est une propriété qui retourne le nombre d'objets de la collection.
"Item": cette méthode est une propriété qui retourne la valeur de l'objet indiqué si l'objet existe ou un code de retour spécifique si l'objet n'existe pas.
"Add": cette méthode ajoute l'objet spécifié à la collection
"Remove": cette méthode retire l'objet spécifié de la collection
"Clear": cette méthode retire tous les objets de la collection.

Selon notre exemple, toutes les méthodes citées précédemment sont exposées dans chaque interface Icol*.* (20, 21, 201, 202) de collection. Par conséquent, le procédé selon l'invention peut être appliqué aux interfaces Icol*.* (20, 21, 201, 202) de collection du fait que chaque collection est elle-même un objet au sens COM.

Les interfaces lobj*.* (10, 11, 12, 111, 112) d'objets collectionnés sont des interfaces qui exposent des méthodes (30 à 32, 300 à 302, 310, 3000, 3100) permettant de manipuler les objets correspondants. En fait, les méthodes de ces interfaces Iobj*.* (10, 11, 12, 111, 112) d'objets collectionnés servent notamment à connaître ou à modifier l'état d'un objet COM particulier (C10, C11, C12, C11, C112). A chaque objet d'une collection correspond une interface d'objets collectionnés. Les différents objets collectionnés d'une même collection sont alors numérotés par ordre croissant à partir de 0, de sorte qu'il soit possible d'accéder à l'objet souhaité parmi les objets d'une collection et à son interface.

Ces interfaces Iobj*.* (10, 11, 12, 111, 112) d'objets collectionnés, dites interfaces d'objets dans le cadre de notre exemple, ne sont pas concernées directement par le procédé selon l'invention. En effet, chaque objet est manipulé de façon différente selon son type, par conséquent, les méthodes exposées dans les interfaces Iobj*.* d'objets sont différentes d'un objet à un autre. Parmi, les méthodes exposées par les interfaces Iobj*.* d'objets, il peut exister au moins une méthode (31, 32, 301, 302) spécifique appelée pointeur de collection. Ce pointeur de collection permet en fait d'accéder à l'interface de collection correspondant aux objets du niveau inférieur dans la hiérarchie.

Ainsi, l'interface lobj0 (10) de l'objet (C10) parent, c'est-à-dire du point d'entrée de la structure, expose des méthodes qui comprennent deux pointeurs (31, 32) Ptlcol1.1 et Ptlcol1.2 de collection pour accéder respectivement à une première interface de collection (20) Icol1.1 et une deuxième interface de collection (21) Icol1.2. De même, l'interface lobj1.1 (11) d'objets collectionnés correspondant à la première interface de collection (20) Icol1.1 comprend deux pointeurs (301, 302) de collection Ptlcol2.1, Ptlcol2.2 pour accéder respectivement à une première interface de collection (201) Icol2.1 et une deuxième interface de collection (202) Icol2.2.

Ainsi, comme expliqué précédemment, le procédé selon l'invention peut s'appliquer à l'implémentation des interfaces Icol*.* (20, 21, 201, 202) de collections d'objets puisque celles-ci exposent toujours le même jeu de méthodes. Dans une première étape, le concepteur du programme de gestion décrit à l'aide du langage de description d'interfaces (IDL) chaque interface Icol*.* (20, 21, 201, 202) de collections d'objets. Comme expliqué précédemment ces interfaces Icol*.* (20, 21, 201, 202) de collections d'objets exposent toujours les mêmes méthodes. Les descriptions de ces interfaces Icol*.* (20, 21, 201, 202) de collections d'objets sont donc toujours quasiment les mêmes. La différence réside dans le fait que le nombre d'objets de la collection est soit fixe, soit variable. Par conséquent, afin d'éviter de dupliquer le code pour décrire chaque interface, le concepteur décrit une première interface dite générique correspondant à une collection d'objets à taille variable et une deuxième interface dite générique correspondant à une collection d'objets à taille fixe.

Soit *IDynCollection,* le nom de la première interface générique correspondant à une collection d'objets à taille variable. La description de cette interface en langage IDL est alors du type

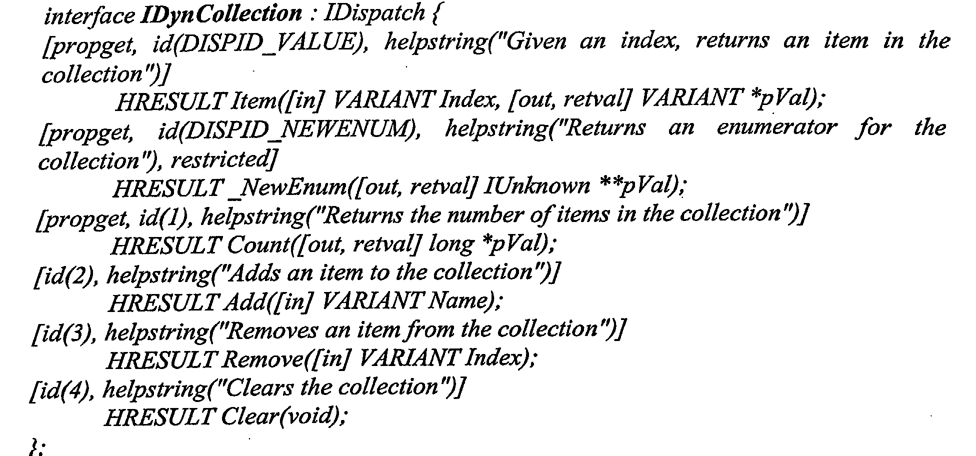

Cette description débute par une ligne définissant une interface sous le nom « IDynCollection » comme héritant de l'interface fondamentale « IDispatch ».

Chacune des méthodes à implémenter pour cette interface est alors définie par deux lignes différentes.

Une première ligne entre crochets « [« et « ] » décrit certains paramètres de la méthode en question :
- « propget » indique que la méthode est une propriété, accédée en lecture.
- « id(DISPID_VALUE) » indique que le numéro d'identification de la méthode au sein de cette interface est « 0 ». En effet, « DISPID_VALUE » est une constante de valeur « 0 », identifiant toujours cette méthode « Item » propre aux collections. De la même façon, « DISPID_NEWENUM » est une constante de valeur « -4 ».
- « helpstring » défini un texte (chaîne de caractères) servant à expliquer la méthode.

Une deuxième ligne définit le nom de la méthode (par exemple « Item » ou « NewEnum »), correspondant au code « HRESULT » caractéristique des objets COM, et définit entre parenthèses les paramètres utilisés par cette méthode :
- « Index » est le nom d'un paramètre de type « VARIANT » utilisé en entrée (« in ») c'est à dire de l'appelant (client) vers l'appelé (serveur) ;
- « *pval » est le nom d'un paramètre de type pointeur, pointant sur des variables de type « VARIANT », utilisé en sortie (« out »), c'est à dire de l'appelé (serveur) vers l'appelant (client) ;
- le mot « retval » indique que la valeur retournée par le paramètre concerné (c'est à dire *pval) constituera la valeur retournée par la méthode à l'issue de son exécution (valeur retournée par la méthode).
- Le nom « IUnknown » est le nom d'une l'interface fondamentale, obligatoirement présente dans tous les objets COM, et dont doivent hériter toutes les autres interfaces.

Ainsi, cette description comprend une implémentation de chacune des méthodes propres aux collection d'objets, à savoir, "_NewEnum", "Count", "Item", "Add", "Remove" et "Clear".

Soit *IStaticCollection* le nom de la deuxième interface générique correspondant à une collection d'objets à taille fixe. La description de cette interface en langage IDL est alors du type

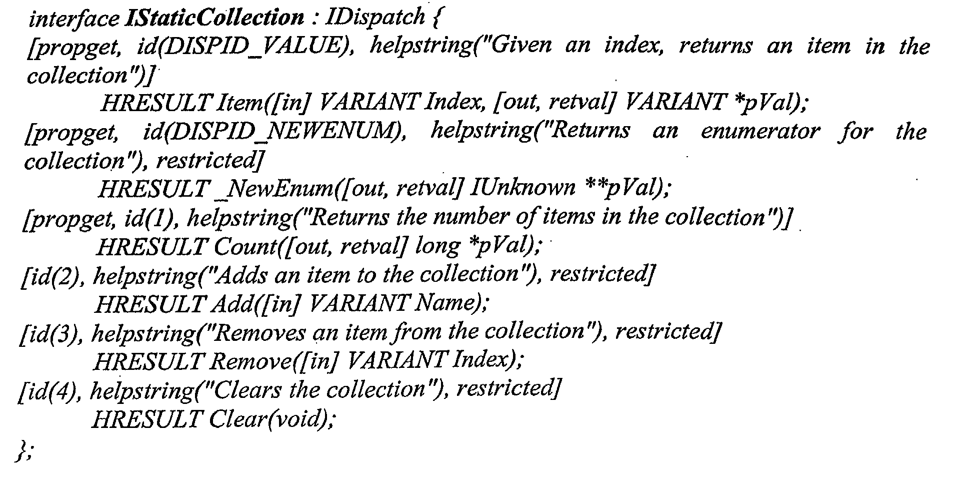

De même que pour la première interface générique définie précédemment, cette description comprend donc une implémentation de chaque méthode propre aux collections d'objets, à savoir, "_NewEnum", "Count", "Item", "Add", "Remove" et "Clear".

Les deux descriptions précédentes ne diffèrent que par le mot clé "restricted" appliqué aux méthodes "Add", "Remove" et "Clear". Ce mot clé enlève l'accès de ces méthodes à certaines applications clientes, mais pas aux clients C++.

La description de chacune des deux interfaces génériques est mémorisée dans un fichier déterminé dans des moyens de mémorisation.

Ainsi, la description d'une interface Icol*.* (20, 21, 201, 202) de collections d'objets se limite simplement à une déclaration d'héritage de l'une ou l'autre des interfaces génériques décrites précédemment.

Ainsi, pour une interface de collections d'objets à taille variable dont le nom est ICol1.2, la description est du type:

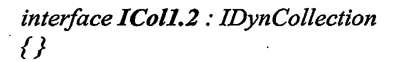

De même, pour une interface de collections d'objets à taille fixe dont le nom est ICol1.1, la description est du type:

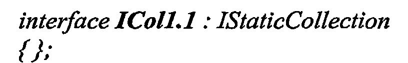

Dans une autre étape, le concepteur décrit dans une classe modèle du langage de programmation, par exemple, dans le langage C++, le code d'une collection générique nommé par exemple CGenerique.

Les paramètres de la classe modèle comprennent notamment le nom de l'interface de collection et le type des objets collectionnés.

A titre d'exemple, l'implémentation en C++ de la collection générique CGenerique est du type:

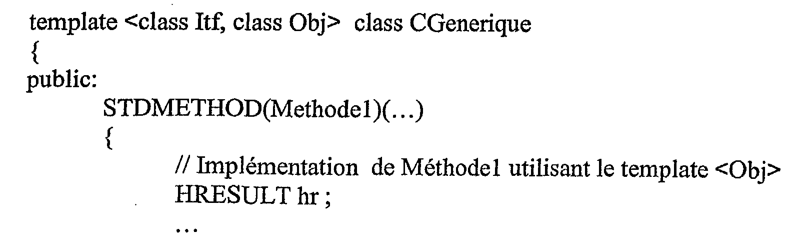

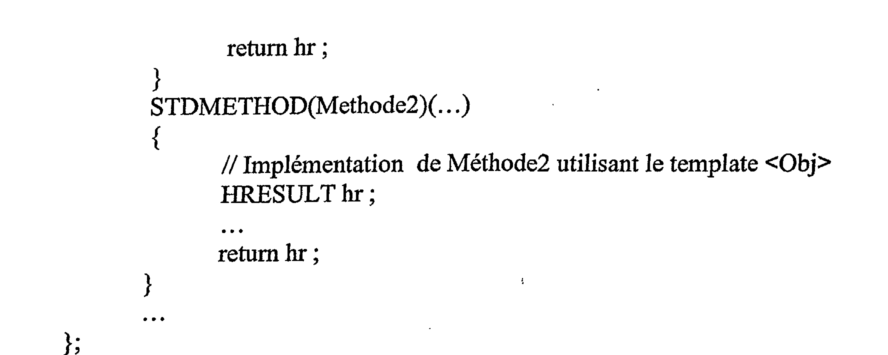

La première ligne de la description comprend le nom de la classe modèle ("CGenerique") et les paramètres de la classe modèle ("class Itf" et "class Obj").

Lors de l'utilisation de la classe modèle pour créer un objet, le premier paramètre *« class Itf »* de la classe modèle correspondra au nom de l'interface de collections d'objets et le deuxième paramètre *« class Obj »* correspondra au nom des objets à collectionner.

Le terme « STDMETHOD » invoque l'utilisation d'une macro (identificateur représentant une expression écrite en langage C++) définissant la signature de la méthode en question. Il est suivi du nom de la fonctionnalité, ou méthode, définie et des paramètres de cette méthode (non précisés dans l'exemple : « (...) »).

Les lignes suivantes (non précisées dans l'exemple: «... ») contiennent le code réalisant les opérations effectuées par la méthode.

La dernière ligne pour chaque méthode est « return hr ; », indiquant de renvoyer à l'utilisateur de la méthode le paramètre « hr» dont la valeur a été définie dans le code précédent et qui renseigne sur le succès des opérations effectuées par la méthode. Un succès est indiqué par la valeur « 0 », un échec par une valeur négative.

Dans cet exemple, et dans le cas où la classe CGenerique correspond à l'implémentation d'une interface de collection, Méthode 1 et Méthode 2 correspondent à deux des six méthodes ("_NewEnum", "Count", "Item", "Add", "Remove", "Clear") exposées par une interface de collection. Les quatre autres méthodes sont implémentées dans la même classe modèle, et de façon similaire à Méthode 1 et Méthode 2.

Ainsi, la classe CGenerique fournit l'implémentation de toutes les méthodes de gestion d'une collection.

Le code C++ de la classe modèle constituant la collection générique est mémorisé dans un fichier déterminé dans des moyens de mémorisation, par exemple dans le même répertoire que le fichier de description des interfaces génériques dans le langage IDL.

Dans notre exemple, le concepteur doit également décrire dans le langage C++ chaque objet, élément d'une collection. L'implémentation d'un objet, élément d'une collection, ne pose pas de problème particulier. A titre d'exemple, une classe nommée "Cobj1.1" constituera la description en langage C++ de l'implémentation des méthodes de l'interface "Iobj1.1" d'objets collectionnés.

Ensuite, dans une autre étape, le concepteur décrit, à l'aide du langage C++, une classe d'implémentation correspondant à chacune des interfaces Icol*.* (20, 21, 201, 202) de collections d'objets.

A titre d'exemple, la classe d'implémentation "Ccol1.1" de l'interface de collections d'objets "Icol1.1" permettant de collectionner les objets dont la classe d'implémentation est "Cobj1.1", est du type

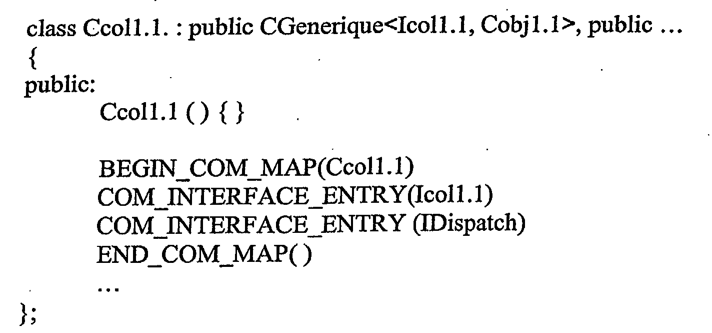

La première ligne indique la création d'une classe Ccol1.1 par héritage à partir de la classe CGenerique, en utilisant l'interface lcol1.1 au titre de l'interface mentionnée dans le code décrivant cette même classe CGenerique. Le mot « public » est une façon de spécifier l'étendue de validité d'un objet dans la structure du programme.

Le mot « BEGIN_COM_MAP » invoque une macro (définie dans la bibliothèque ATL d'éléments logiciels) spécifiant le début de la liste des interfaces à associer à la classe Ccol1.1.

Le mot « COM_INTERFACE_ENTRY" invoque une macro (ATL) spécifiant que l'interface entre parenthèses (ici Icol1.1 puis IDispatch) est une interface à associer à la classe d'implémentation Ccol1.1.

Le nom «IDispatch » est le nom d'une interface fondamentale dont doivent hériter toutes les interfaces supportant les applications clientes qui acquièrent dynamiquement l'information sur leurs méthodes et propriétés.

Le mot « END_COM_MAP » invoque une macro (ATL) spécifiant la fin de la liste des interfaces à associer à la classe mentionnée par la ligne « BEGIN_COM_MAP ».

Ainsi, on comprend qu'en héritant (en première ligne) de la classe modèle (CGenerique), la classe C++ d'implémentation Ccol1.1 d'une interface Icol1.1 de collections d'objets bénéficie du code de cette classe modèle. Par conséquent, il n'est plus nécessaire de dupliquer systématiquement le code décrivant toutes les méthodes de gestion d'une collection dans chacune des classes d'implémentation (Ccol1.1, Ccol1.2, Ccol2.1, Ccol2.2,...) correspondant à chacune des interfaces (respectivement Icol1.1, Icol1.2, Icol2.1, Icol2.2,...) de collections d'objets.

De même, lorsqu'une erreur de programmation doit être corrigée dans la description d'une ou plusieurs méthodes de gestion d'une collection, il suffit de modifier le code de la classe modèle Cgénérique pour que cette correction soit prise en compte dans toutes les classes d'implémentation d'une interface de collection d'objets.

Il doit être évident pour les personnes versées dans l'art que la présente invention permet des modes de réalisation sous de nombreuses autres formes spécifiques sans l'éloigner du domaine d'application de l'invention comme revendiqué. Par conséquent, les présents modes de réalisation doivent être considérés à titre d'illustration, mais peuvent être modifiés dans le domaine défini par la portée des revendications jointes, et l'invention ne doit pas être limitée aux détails donnés ci-dessus.

## Revendications

1. Procédé d'implémentation, dans un système informatique incluant au moins un processeur et des moyens de mémoire, d'une pluralité d'interfaces d'objets, ces objets étant des objets du type COM « Component Object Model » ou des collections de ces objets, et contenus dans les dits moyens de mémoire,
**caractérisé en ce qu'**il comprend :
une étape de mémorisation dans un fichier d'une description de chaque interface (2) d'objets dans un langage de description d'interface (IDL),
une étape de mémorisation dans un fichier d'une description dans un langage de programmation orienté objet d'une classe (1) modèle, cette classe correspondant à l'implémentation d'une interface (4) dite générique exposant toutes les méthodes des interfaces (2) d'objets décrites dans le langage de description d'interfaces,
une étape de mémorisation pour chaque interface (2) d'objet dans un fichier de la description, dans un langage de programmation orienté objet, d'une classe (3) héritant de la classe (1) modèle et correspondant à l'implémentation de l'interface (2) d'objet.

2. Procédé selon la revendication 1, **caractérisé en ce qu'**il comprend
une étape de mémorisation dans un fichier d'une description dans le langage de description d'interfaces, de l'interface d'objet (4) générique,
une étape de mémorisation dans un fichier de la description de chaque interface (2) d'objets consistant alors à établir une relation d'héritage avec l'interface (4) d'objets générique dans le langage de description d'interface.

3. Procédé selon la revendication 2, **caractérisé en ce que** l'étape de mémorisation dans un fichier d'une description de l'interface d'objet (4) générique, dans le langage de description d'interfaces, comprend une description d'une première interface générique correspondant à une collection d'objets à taille variable et une description d'une deuxième interface générique correspondant à une collection d'objets à taille fixe.

4. Procédé selon l'une des revendications 1 à 3, **caractérisé en ce que** le langage de description d'interfaces est le langage "Interface Definition Language" (IDL).

5. Procédé selon l'une des revendications 1 à 4, **caractérisé en ce que** le langage de programmation orienté objet est le langage C++.

6. Procédé selon l'une des revendications 1 à 5, **caractérisé en ce que** chaque interface (2) d'objet est une interface de collection d'objets exposant toutes les méthodes de gestion d'une collection.

7. Système informatique incluant au moins un processeur et des moyens de mémoire contenant des objets du type COM « Component Object Model » ou des collections de ces objets, **caractérisé en ce qu'**il comprend des moyens pour la mise en oeuvre du procédé selon l'une des revendications précédentes.

8. Programme d'ordinateur comprenant des portions / moyens /instructions de code de programme pour l'exécution des étapes du procédé selon l'une des revendications 1 à 6, lorsque ledit programme est exécuté sur un ordinateur.
